# EUROPEAN PATENT SPECIFICATION

(11) **EP 3 599 141 B1**
(45) Date of publication and mention of the grant of the patent: **14.12.2022**
(21) Application number: 18465549.6
(22) Date of filing: 25.07.2018
(51) Int. Cl.: B60W 60/00, B60W 30/18, B60W 50/00, B60W 30/10, B60W 40/06, B60W 40/04

(54) **A MULTI HYPOTHESIS PREDICTION DEVICE FOR A VEHICLE**
MULTIHYPOTHESENVORHERSAGEVORRICHTUNG FÜR EIN FAHRZEUG
DISPOSITIF DE PRÉDICTION MULTI HYPOTHÈSE POUR UN VÉHICULE

(43) Date of publication of application: 29.01.2020
(73) Proprietor: Continental Autonomous Mobility Germany GmbH, 85057 Ingolstadt (DE)
(72) Inventor: Burca, Cristian, 300273 Timisoara (RO)
(74) Representative: Continental Corporation

(56) References cited:
- JP-A- 2014 028 543
- US-A1- 2016 221 573
- US-B1- 9 910 439
- US-B2- 9 934 689

## Description

The invention relates to a multi hypothesis prediction device, a vehicle comprising the multi hypothesis prediction device, a method for multi hypothesis prediction, a computer program element and a computer-readable medium.

Autonomous driving was and may still be focused on highway scenarios. Also urban tests and in-city self-driving show-offs are typically performed in controlled scenarios. However, autonomous vehicles need to be able to adapt to unexpected situations.

From document JP 2014 028543 A, a vehicle travel control device for a vehicle is known. The vehicle travel control device executes control to stop the vehicle when a red light of a traffic light is detected from an image obtained by an image pickup means. The vehicle is stopped in such manner that the vehicle does not protrude from its lane, but within the lane, the vehicle is positioned in such manner that the traffic light is in a field of view of the image pickup means.

In US 9,910,439 B1, methods and an apparatus for controlling autonomous vehicles utilizing a map that include visibility information are disclosed. The map is stored at a computing device associated with a vehicle, wherein the vehicle is configured to operate in an autonomous mode that supports a plurality of driving behaviours. The map includes information about a plurality of roads, a plurality of features, and visibility information for at least a first feature in the plurality of features. The computing device queries the map for visibility information for the first feature at a first position. The computing device,

in response to querying the map, receives the visibility information for the first feature at the first position. The computing device selects a driving behaviour for the vehicle based on the visibility information and the computing device controls the vehicle in accordance with the selected driving behaviour.

US 2016/0221573 A1 discloses arrangements related to mitigating risk for autonomous vehicles in occupant view and vehicle sensor obstructed environments by identifying an information critical area in an external environment relative to a future planned driving maneuver of the autonomous vehicle. If at least a portion of the information critical area is outside of a determined occupant viewable area and a determined sensor detection area due to the presence of an obstructing object, it can be determined whether the obstructing object is moving favourably relative to the future planned driving maneuver. If the obstructing object is moving favourably relative to the future planned driving maneuver, the autonomous vehicle can be caused to implement the future planned driving maneuver while moving relative to the obstructing object so as to be shielded by the detected obstructing object from any potential objects located in the at least a portion of the information critical area.

It may be an object of the present invention to increase traffic safety.

The object of the present invention is solved by the subject-matter of the independent claims, wherein further embodiments are incorporated in the dependent claims.

A first aspect of the invention is related to a multi hypothesis prediction device for a vehicle, particularly an autonomous vehicle. The multi hypothesis prediction device comprises a sensor arrangement, a calculation module and a path determination module for determining a path of the vehicle. The calculation module is configured to determine at least one point of interest and its location, either by analysing the acquired sensor data of the sensor arrangement or by a map. The calculation module is further configured to determine a field of view of the sensor arrangement at a future position of the vehicle along the path of the vehicle. The calculation module is configured to determine, whether the location of the point of interest is within the field of view at the future position, and if this is the case, to move the vehicle to the future position, and if this is not the case, to not move the vehicle to the future position.

It should be noted that the determined field of view is a dynamic field of view, which changes according to the future position of the sensor arrangement and occlusions.

It may be seen as an advantage that this multi hypothesis approach of the multi hypothesis prediction device may simulate human decision making in driving scenarios, in particular, in urban driving scenarios. The multi hypothesis prediction device becomes aware of the consequences of the movement of the vehicle.

Thus, the multi hypothesis prediction device may change the control of the vehicle from "reacting" to "acting" in a way that it may act upon current and previous knowledge (prediction) and not only react on environment changes.

In particular, the multi hypothesis prediction device may solve visibility related problems that may occur in low visibility urban driving scenarios.

In urban and off-highway scenarios, it is sometimes difficult to detect a traffic light or traffic sign because of an obstruction (static or dynamic) . Due to the fixed position of the sensors of the vehicle, this problem may be even more relevant. The multi hypothesis prediction device may prevent this from happening by analysing predicting the future field of view of the sensor arrangement and more specifically, predicting how the field of view will change for a future position of the vehicle along the path.

The multi hypothesis prediction device comprises a sensor arrangement, a calculation module, calculation circuit or processor, and a path determination module. The path determination module may be configured to determine the path of the vehicle, wherein the path comprises at least one future position of the vehicle. It should be noted that the path may comprise multiple future positions of the vehicle, e.g. a trajectory. The path determination module may be a navigation system (satnav) including a digital map and a localisation module, such as GPS, Galileo or GLONASS. Further, the map may comprise the location of the points of interest. The sensor arrangement may be configured to acquire sensor data of the environment of the vehicle. The calculation module is configured to analyse the acquired sensor data and to determine points of interest and its locations for the autonomous vehicle.

It should be noted that the point of interest might also be an area of interest, such as a driving lane or a pedestrian area. The calculation module may be further configured to determine surrounding objects (static or dynamic), including their heights, or at least classifications that may lead to height information of the objects.

The multi hypothesis prediction device may track and predict the visibility of particular points of interest at the future position or along the path of the vehicle. The multi hypothesis prediction device collects and uses information of the surroundings of the vehicle, such as the location of a point of interest (from a previous detection or from a high-resolution map) . The multi hypothesis prediction device may be able to decide if the point of interest could be moved outside the field of view of the vehicle sensors when the vehicle moves to a certain future position. The calculation module may determine if the location of the point of interest is still within the field of view at the future position of the vehicle. If this is the case the vehicle may be moved to the future position and if this is not the case, the vehicle may not be moved to the future position, for example by changing the path of the vehicle.

It should be noted that the calculation module performs the multi-hypothesis analysis, which is built upon current and previous detections and evaluates what would be the sensor arrangement's field of view for particular hypothesis (movements). The calculation module is further configured to evaluate those hypotheses and decide how the vehicle should behave based on the information received. Subsequently, the calculation module may be configured to control the vehicle accordingly, by braking, accelerating and/or steering.

Thus, blocking scenarios of autonomous vehicles may be avoided by the multi hypothesis prediction device.

The complexity of the multi hypothesis prediction device may be scalable, starting at predicting the current state and what is the impact of the field of view, if the vehicle would continue to move along the path. More complex approaches could tackle also direction changes of the vehicle that could help in certain scenarios and may increase the field of view and probabilities to detect the point of interest by directing the vehicle in such way that the maximum detection capabilities of the sensor arrangement are used.

Alternatively or in addition, the sensor arrangement may also comprise dynamic sensors that can move their focus according to their point of interest. The output of the multi hypothesis prediction device may be an input for the focus of the sensor arrangement.

The field of view of the sensor arrangement may be represented as a polygon. Thus, a plurality of edge points are connected to define an area which can be seen by the sensor arrangement. Further, the field of view may be determined by subtracting obstructions, such as other vehicles, building, walls or trees, which are determined by the sensor arrangement, from the maximum (under ideal conditions) field of view of the sensor arrangement.

It should be noted, that the obstruction might also be a dynamic obstruction, which changes its relative location in view of the multi hypothesis prediction device or the vehicle, for example another vehicle that also drives.

According to the invention, the calculation module is configured to determine a stopping location of the vehicle, such that the point of interest is still within the field of view of the sensor arrangement or is visible by the sensor arrangement.

Thus, if the vehicle drives towards a traffic light and the traffic light is red, the vehicle should stop. At the stopping location of the vehicle, the sensor arrangement of the multi hypothesis prediction device should be able to see the traffic light, such that the vehicle may drive if the traffic light turns green. In other words, the point of interest (traffic light) should be within the field of view of the sensor arrangement to detect changes of the point of interest. However, if the sensor arrangement is not able to see the traffic light, the vehicle cannot start driving again. This could lead to blocking scenarios. To avoid such a blocking scenario, the multi hypothesis prediction device determines the field of view at a future position along a determined path of the vehicle. Further, the calculation module determines a stopping location at which the traffic light is still in the field of view of the sensor arrangement.

According to an embodiment, the calculation module is configured to change a driving lane of the vehicle, such that the point of interest is still within the field of view of the sensor arrangement.

The calculation module may be configured to change the path of the vehicle including changing the driving lane, such that the point of interest is still visible for the sensor arrangement or within the field of view of the sensor arrangement.

According to another embodiment, the calculation module is configured to determine the field of view in different heights or planes.

The sensor arrangement may comprise multiple different sensors and sensor technologies. Each sensor may have a different opening angle in both, the vertical, e.g. 60°, and the horizontal, e.g. 170°, direction. Further, obstructions, such as other vehicles, walls, buildings or trees, restricting or delimiting the field of view may have different heights. Thus, the field of view of the sensor arrangement may change along a height direction. In other words the field of view at a height of 2m may be different to a field of view at a height of 1m. Further, the point of interest may be arranged at an elevated position, for example over the street or at a pole. Therefore, the field of view of the sensor arrangement may change according to the height, which may be relevant for determining whether the location of the point of interest is within the field of view. Thus, the calculation module may be configured to determine the field of view at different heights.

According to an embodiment, each of the different heights or planes are spaced 50cm apart from each other. Further, also different distances between the heights or planes are possible such as 30cm or 70cm.

According to an embodiment, the calculation module is configured to determine the point of interest based on sensor data from the sensor arrangement or by objects in a map.

According to an embodiment, the point of interest is at least one of the following: a traffic light, a traffic sign, a driving lane, a roundabout, an intersection, a cross-walk or a pedestrian area. Thus, the point of interest may also be an area of interest. According to an embodiment, the sensor arrangement comprises at least one of the following: a camera, a radar sensor, a lidar sensor, an ultrasonic sensor or a combination thereof.

According to yet another aspect of the invention, a vehicle comprising the above and hereinafter described multi hypothesis prediction device is provided.

The vehicle may, for example, be a motor vehicle, such as a car, bus or truck.

A further aspect of the invention provides a method for multi hypothesis prediction according to claim 9.

According to another aspect of the invention, there is provided a computer program element for controlling the multi hypothesis prediction device as previously described which, when the computer program element is executed by the calculation module or by a processor, is adapted to perform the method steps as previously described.

There is also provided a computer readable medium having stored the computer element as previously described. Advantageously, the benefits provided by any of the above aspects equally apply to all of the other aspects and vice versa.

The above aspects and examples will become apparent from and be elucidated with reference to the embodiments described hereinafter.

Exemplary embodiments will be described in the following with reference to the following drawings:
Fig. 1 show a block diagram of a multi hypothesis prediction device according to an embodiment.
Fig. 2 show a field of view of the sensor arrangement according to an embodiment.
Fig. 3 show a determined stopping point, such that the point of interest is still within the field of view, according to an embodiment.
Fig. 4 show a vehicle with a multi hypothesis prediction device according to an embodiment.
Fig. 5 show a flow chart of a method for multi hypothesis prediction according to an embodiment.

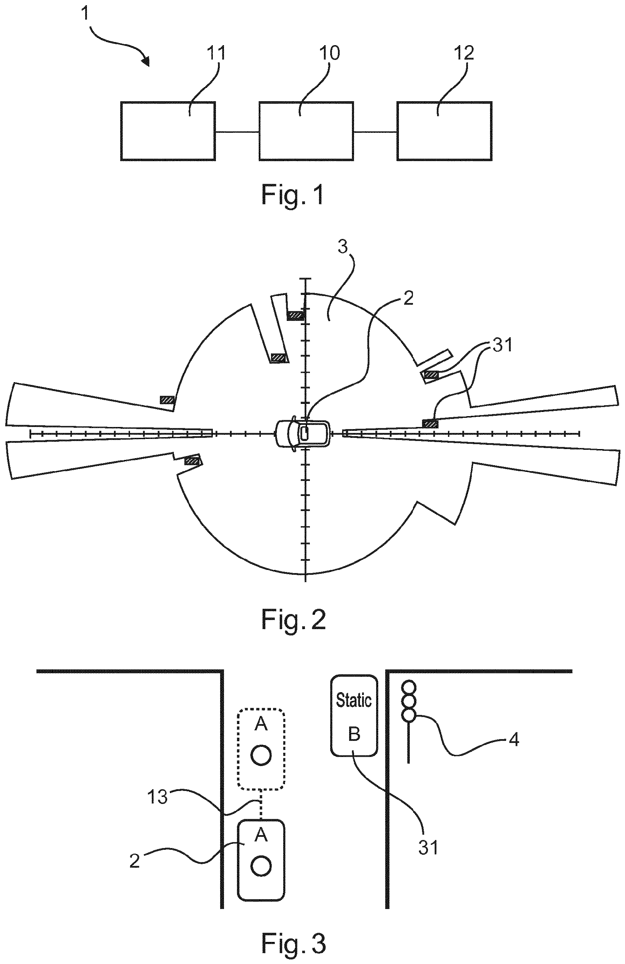

Fig. 1 show a multi hypothesis prediction device 1. The multi hypothesis prediction device 1 comprises a sensor arrangement 11, a calculation module 10 and a path determination module 12. The path determination module 12 may be configured to determine a path of the vehicle, wherein the path comprises future positions of the vehicle. The path determination module 12 may be a navigation system (satnav) including a GPS module (or another positioning module). The sensor arrangement 11 may be configured to acquire sensor data of the vehicle environment. The sensor arrangement 11 may comprises a camera, a radar sensor, a lidar sensor, an ultrasonic sensor or a combination thereof. The calculation module 10 may be configured to analyse the sensor data and determine at least one point of interest and its location.

Alternatively or in addition, the point of interest may be listed in a map. Further, the calculation module 10 is configured to determine a field of view of the sensor arrangement 11 at a future position. Thus, which areas may be seen by the sensor arrangement 11 or from which objects the sensor arrangement 11 is able to acquire sensor data. This field of view may be represented as a polygon. The calculation module 10 is further configured to determine the field of view of the sensor arrangement 11 at the future position of the vehicle comprising the multi hypothesis prediction device 1 along the path of the vehicle. The field of view of the sensor arrangement 11 may be restricted by obstructions or objects blocking the view of the sensor arrangement 11. Furthermore, the calculation module 10 is configured to determine whether the location of the point of interest is within the determined field of view at a future position. If the location of the point of interest is within the field of view at the future position, the calculation module 10 is configured to move the vehicle to this future position. If the location of the point of interest is not within the field of view at the future position, the calculation module does not move the vehicle to this future position or changes the path of the vehicle. The calculation module 10 may determine a stopping location for the vehicle, such that the point of interest, for example a traffic light, is still within the field of view of the sensor arrangement 11. Then the sensor arrangement 11 is able to acquire sensor data of the point of interest at the future position or stopping location, for example a change of the traffic light (from red to green). Further, the vehicle may also change the driving lane, such that the point of interest is still within the field of view of the sensor arrangement. Further, the calculation module 10 is configured to determine the field of view in different heights or planes parallel to the ground, since the heights of obstructions differ or some points of interest are located at an elevated position. The calculation module 10 may determine each 50cm, measured in a height direction, a field of view of the sensor arrangement 11.

It might be an issue in autonomous driving vehicle that at a current location the autonomous vehicle is not able to detect or acquire sensor data of a point of interest, such as a traffic light, traffic sign or a driving lane, which may lead to blocking scenarios. For example, the vehicle sees a red traffic light, therefore it stops, but at the stopping location the sensor arrangement of the vehicle does not see the traffic light. Thus, the vehicle does not know when the traffic light turns green. Therefore, it would be useful if the autonomous vehicle would determine if the point of interest is still visible or within the field of view at the future position, such that the autonomous vehicle reacts properly and blocking scenarios may be avoided.

Fig. 2 show a top view of a vehicle 2 with the multi hypothesis prediction device and the field of view 3 of the sensor arrangement. The field of view 3 surrounds the vehicle 2 but does not have the same range in all directions. Typically, the range of sensors, such as a radar sensor, arranged at the front and the rear of the vehicle 2 may have a greater range as the sensors arranged at a side of the vehicle 2. In Fig. 2 it can be seen, that multiple obstructions 31, such as objects, walls, buildings, trees or other vehicles, restrict or delimit the maximum field of view of the sensor arrangement. Therefore, the field of view 3 should be determined for multiple future position along the path of the vehicle 2, since at each position the field of view 3 may change and the perspective towards the points of interest change accordingly. The field of view 3 may be represented as a polygon having straight and/or circular elements. The sensor arrangement of Fig. 2 may comprise different sensors with different opening angles (in a horizontal and/or vertical direction), which have a higher range at the front/rear of the vehicle 2. For example, the sensors at the front/rear are radar sensors and the sensors at the side are ultrasonic sensors. Further, the sensors may be already present in the vehicle for example as a part of a surround view system of a parking assistant.

Fig. 3 show a top view of a traffic scenario at an intersection with a traffic light. The traffic light is in this case the determined point of interest 4, as its controls the traffic through this intersection. It should be understood that the point of interest 4 might also be a traffic sign, a driving line, a roundabout, an intersection, a cross-walk or a pedestrian area. Next to the traffic light, an obstruction 31 or object, such as a parked vehicle, is located. The vehicle 2 with the multi hypothesis prediction device drives along a path 13. The multi hypothesis prediction device determines the stopping position at which the traffic light is still visible to the sensor arrangement of the vehicle 2. Thus, the multi hypothesis prediction device determines the field of view at a future position, represented by the pointed outline. At the future position the field of view of the sensor arrangement would be obstructed by the obstruction 31, such that the sensor arrangement of the vehicle 2 is not able to see the point of interest 4. Thus, the sensor arrangement would not be able to see whether the traffic light changes, e.g. turning green. Therefore, the calculation module of the multi hypothesis prediction device stops the vehicle 2 before, such that the location of the point of interest 4 is still within the field of view of the sensor arrangement. Thus, the calculation module is able to detect whether the traffic light changes its state. Thus, a blocking of traffic can be avoided, since the vehicle 2 is able to drive according to the traffic light or a traffic sign.

In the example of Fig. 3, the vehicle 2 tries to enter the intersection. This intersection has a traffic light that is situated in the right of the lane. The first lane is occupied by a static object 31 that has a height, which does not allow the sensor arrangement of vehicle 2 to see above it.

What happens is that the vehicle 2 detects the traffic light (from the sensor arrangement or directly from a high-resolution map) . Further, it is now essential for the vehicle 2 to remain in a position that the traffic light remains in its sight. In this particular example, the light could be red when vehicle 2 first detects the traffic light. The calculation module of the multi hypothesis prediction device now knows the location of the traffic light in respect to the vehicle and knows that a static object 31 is placed in the left of the traffic light.

The multi hypothesis prediction device is configured to determine for multiple "future" positions along the path of the vehicle 2 (from the path determination module), what is the best suitable position the vehicle 2 to stop, so that the traffic light will still remain visible and detectable by the sensor arrangement, for example a camera. In Fig. 3, if the vehicle 2 would have moved to the dotted position it would have lost the visibility of the traffic light, this leading to a blocking situation for an autonomous driving vehicle. The last status quo received was that the traffic light was red but after passing near the object 31, it cannot detect any changes of the red light.

Moreover if another vehicle would follow the vehicle 2, the autonomous vehicle would not be able to move backwards to a visible position, the only solution for the autonomous vehicle would be to enter either the intersection or handover the control to the human driver.

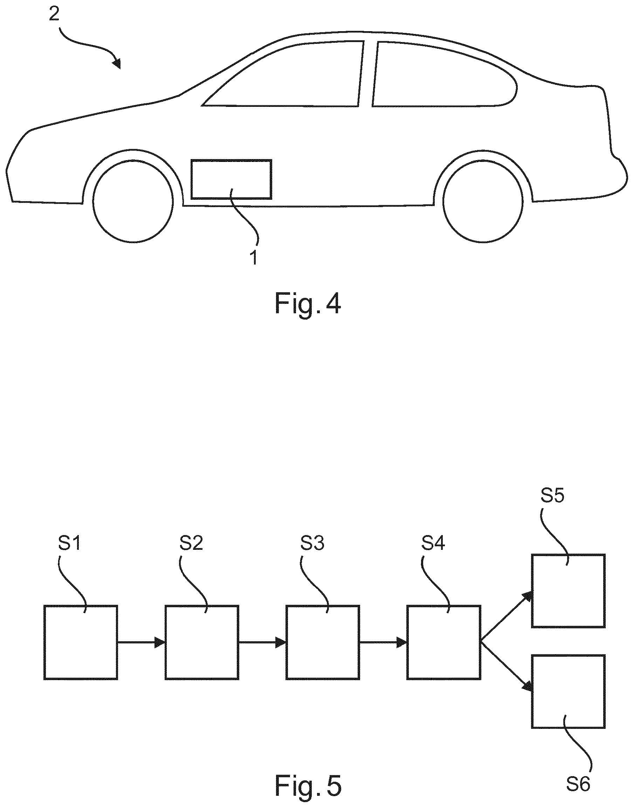

Fig. 4 show a vehicle 2 comprising the multi hypothesis prediction device 1. The multi hypothesis prediction device 1 may control the path or trajectory of the vehicle 2. In particular, the multi hypothesis prediction device 1 is configured to determine a stopping location for the vehicle 2, such that a point of interest is still within the determined field of view of the sensor arrangement.

Fig. 5 show a flow chart for a method for multi hypothesis prediction. In steps S1, at least one point of interest is defined and its location. This point of interest may be determined by analysing sensor data of a sensor arrangement or the point of interest is within a map. The point of interest may be a traffic light, a traffic sign or a roundabout. In step S2, the path of the vehicle including a future position of the vehicle is determined. A path determination module, such as a navigation system, may determine the path of the vehicle. In step S3, the field of view of a sensor arrangement at a future position of the vehicle along the path is determined. The field of view may be determined by a calculation unit, which identifies objects and reduces these objects or obstructions from the maximum field of view of the sensor arrangement. In step S4, the calculation module determines whether the location of the point of interest is located within the field of view at the future position. If this is the case, step S5 is performed and the vehicle is moved to the future position. If steps S4 is not the case, step S6 is performed and the vehicle is not moved to the future position.

## Claims

1. A multi hypothesis prediction device (1) for a vehicle (2), comprising:
- a sensor arrangement (11);
- a calculation module (10); and
- a path determination module (12) for determining a path (13) of the vehicle (2),
wherein the calculation module (10) is configured to 10 determine at least one point of interest (4) and its location by analysing acquired sensor data of the sensor arrangement (11),
wherein the calculation module (10) is configured to determine a field of view (3) of the sensor arrangement (11) at a future position of the vehicle (2) along the path (13), wherein the calculation module (10) is further configured to determine, whether the point of interest (4) is within the field of view (3) of the sensor arrangement (11) at the future position, and
if this is the case, to move the vehicle (2) to the future position,
if this is not the case, to not move the vehicle (2) to the future position and to change the path of the vehicle (2), wherein the calculation module (10) is configured to perform a multi-hypothesis analysis, which is built upon current and previous detections of the sensor arrangement (11), and to evaluate what would be the sensor arrangement's field of view (3) for particular hypothesis and to evaluate those hypotheses and decide how the vehicle (2) should behave based on the information received, and to determine a stopping location of the vehicle (2), such that the point of interest (4) is still within the field of view (3) of the sensor arrangement (11) at the stopping location.

2. The multi hypothesis prediction device (1) according to claim 1,
wherein the calculation module (10) is configured to change a driving lane of the vehicle (2), such that the point of interest (4) is still within the field of view (3) of the sensor arrangement (4).

3. The multi hypothesis prediction device (1) according to any one of the preceding claims,
wherein the calculation module (10) is configured to determine the field of view (3) in different heights or planes.

4. The multi hypothesis prediction device (1) according to claim 3,
wherein each of the different heights or planes are spaced 50cm apart from each other.

5. The multi hypothesis prediction device (1) according to each one of the preceding claims,
wherein the calculation module (10) is configured to determine the point of interest (4) based on sensor data from the sensor arrangement (11) or by objects in a map.

6. The multi hypothesis prediction device (1) according to each one of the preceding claims,
wherein the point of interest (4) is at least one of the following: a traffic light, a traffic sign, a driving lane, a roundabout, an intersection, a cross-walk or a pedestrian area.

7. The multi hypothesis prediction device (1) according to each one of the preceding claims,
wherein the sensor arrangement (11) comprises at least one of the following: a camera, a radar sensor, a lidar sensor, an ultrasonic sensor or a combination thereof.

8. A vehicle (2) with a multi hypothesis prediction device (1) according to any one of the preceding claims.

9. A method for multi hypothesis prediction, comprising the steps of:
- Defining (S1) at least one point of interest (49) and its location by analysing acquired sensor data of a sensor arrangement (11);
- Determining (S2) a path (13) of a vehicle (2);
- Determining (S3) a field of view (3) of the sensor arrangement (11) at a future position of the vehicle (2) along the path (13);
- Determining (S4), by a calculation module (10), whether the location of the point of interest (4) is within the field of view (3) at the future position; and:
if this is the case (S5), to move the vehicle (2) to the future position,
if this is not the case (S6), to not move the vehicle (2) to the future position and to change the path (13) of the vehicle (2)
- Performing, by the calculation module (10), a multi-hypothesis analysis, which is built upon current and previous detections of the sensor arrangement (11), and evaluating what would be the sensor arrangement' s field of view (3) for particular hypothesis, and
- Evaluating, by the calculation module (10), those hypotheses and decide how the vehicle (2) should behave based on the information received, and determines a stopping location of the vehicle (2), such that the point of interest (4) is still within the field of view (3) of the sensor arrangement (11) at the stopping location.

10. A computer program element for controlling a multi hypothesis prediction device according to any one of claims 1 to 7 and/or a vehicle according to claim 8, which when executed by a calculation module of the multi hypothesis prediction device causes the multi hypothesis prediction device to carry out the method according to claim 9.

11. A computer-readable medium, on which a computer program element according to claim 10 is stored.

## Patentansprüche

1. Multi-Hypothesen-Vorhersagevorrichtung (1) für ein Fahrzeug (2), die Folgendes aufweist:
- eine Sensoranordnung (11);
- ein Berechnungsmodul (10); und
- ein Pfadbestimmungsmodul (12) zum Bestimmen eines Pfads (13) des Fahrzeugs (2),
wobei das Berechnungsmodul (10) dazu ausgebildet ist, mindestens einen Punkt von Interesse (4) und seinen Standort durch Analysieren von erfassten Sensordaten der Sensoranordnung (11) zu bestimmen,
wobei das Berechnungsmodul (10) dazu ausgebildet ist, ein Sichtfeld (3) der Sensoranordnung (11) an einer zukünftigen Position des Fahrzeugs (2) entlang des Pfads (13) zu bestimmen, wobei das Berechnungsmodul (10) ferner dazu ausgebildet ist,
zu bestimmen, ob der Punkt von Interesse (4) an der zukünftigen Position innerhalb des Sichtfelds (3) der Sensoranordnung (11) liegt,
und
wenn dies der Fall ist, das Fahrzeug (2) zu der zukünftigen Position zu bewegen,
wenn dies nicht der Fall ist, das Fahrzeug (2) nicht zu der zukünftigen Position zu bewegen und den Pfad des Fahrzeugs (2) zu ändern,
wobei das Berechnungsmodul (10) dazu ausgebildet ist,
eine Multi-Hypothesen-Analyse durchzuführen, die sich auf aktuelle und vorhergehende Detektionen der Sensoranordnung (11) stützt, und zu evaluieren, was das Sichtfeld (3) der Sensoranordnung für eine bestimmte Hypothese wäre, und
diese Hypothesen zu evaluieren und basierend auf der empfangenen Information zu entscheiden, wie sich das Fahrzeug (2) verhalten sollte, und
einen Anhalteort des Fahrzeugs (2) derart zu bestimmen, dass der Punkt von Interesse (4) am Anhalteort immer noch innerhalb des Sichtfelds (3) der Sensoranordnung (11) liegt.

2. Multi-Hypothesen-Vorhersagevorrichtung (1) nach Anspruch 1,
wobei das Berechnungsmodul (10) dazu ausgebildet ist, eine Fahrspur des Fahrzeugs (2) derart zu ändern, dass der Punkt von Interesse (4) immer noch innerhalb des Sichtfelds (3) der Sensoranordnung (4) liegt.

3. Multi-Hypothesen-Vorhersagevorrichtung (1) nach einem der vorhergehenden Ansprüche,
wobei das Berechnungsmodul (10) dazu ausgebildet ist, das Sichtfeld (3) in unterschiedlichen Höhen oder Ebenen zu bestimmen.

4. Multi-Hypothesen-Vorhersagevorrichtung (1) nach Anspruch 3,
wobei jede der unterschiedlichen Höhen oder Ebenen 50 cm voneinander beabstandet sind.

5. Multi-Hypothesen-Vorhersagevorrichtung (1) nach jedem der vorhergehenden Ansprüche,
wobei das Berechnungsmodul (10) dazu ausgebildet ist, den Punkt von Interesse (4) basierend auf Sensordaten von der Sensoranordnung (11) oder mittels Objekten in einer Karte zu bestimmen.

6. Multi-Hypothesen-Vorhersagevorrichtung (1) nach jedem der vorhergehenden Ansprüche,
wobei der Punkt von Interesse (4) mindestens eines der Folgenden ist: eine Lichtzeichenanlage, ein Verkehrsschild, eine Fahrspur, eine Kreisverkehrsanlage, eine Kreuzung, ein Fußgängerüberweg oder eine Fußgängerzone.

7. Multi-Hypothesen-Vorhersagevorrichtung (1) nach jedem der vorhergehenden Ansprüche,
wobei die Sensoranordnung (11) mindestens eines der Folgenden aufweist: eine Kamera, einen Radarsensor, einen Lidarsensor, einen Ultraschallsensor oder eine Kombination daraus.

8. Fahrzeug (2) mit einer Multi-Hypothesen-Vorhersagevorrichtung (1) nach einem der vorhergehenden Ansprüche.

9. Verfahren für eine Multi-Hypothesen-Vorhersage, das die folgenden Schritte aufweist:
- Definieren (S1) mindestens eines Punkts von Interesse (49) und seines Standorts durch Analysieren von erfassten Sensordaten einer Sensoranordnung (11);
- Bestimmen (S2) eines Pfads (13) eines Fahrzeugs (2);
- Bestimmen (S3) eines Sichtfelds (3) der Sensoranordnung (11) an einer zukünftigen Position des Fahrzeugs (2) entlang des Pfads (13);
- Bestimmen (S4), durch ein Berechnungsmodul (10), ob der Standort des Punkts von Interesse (4) an der zukünftigen Position innerhalb des Sichtfelds (3) liegt; und:
wenn dies der Fall (S5) ist, Bewegen des Fahrzeugs (2) zu der zukünftigen Position,
wenn dies nicht der Fall (S6) ist, Nicht-Bewegen des Fahrzeugs (2) zu der zukünftigen Position und Ändern des Pfads (13) des Fahrzeugs (2)
- Durchführen, durch das Berechnungsmodul (10), einer Multi-Hypothesen-Analyse, die sich auf aktuelle und vorhergehende Detektionen der Sensoranordnung (11) stützt, und Evaluieren, was das Sichtfeld (3) der Sensoranordnung für eine bestimmte Hypothese wäre, und
- Evaluieren, durch das Berechnungsmodul (10), dieser Hypothesen und Entscheiden, basierend auf der empfangenen Information, wie sich das Fahrzeug (2) verhalten sollte, und Bestimmen eines Anhalteorts des Fahrzeugs (2) derart, dass der Punkt von Interesse (4) am Anhalteort immer noch innerhalb des Sichtfelds (3) der Sensoranordnung (11) liegt.

10. Computerprogrammelement zum Steuern einer Multi-Hypothesen-Vorhersagevorrichtung nach einem der Ansprüche 1 bis 7 und/oder eines Fahrzeugs nach Anspruch 8, das, wenn es durch ein Berechnungsmodul der Multi-Hypothesen-Vorhersagevorrichtung ausgeführt wird, die Multi-Hypothesen-Vorhersagevorrichtung veranlasst, das Verfahren nach Anspruch 9 durchzuführen.

11. Computerlesbares Medium, auf dem ein Computerprogrammelement nach Anspruch 10 gespeichert ist.

## Revendications

1. Dispositif de prédiction multi hypothèse (1) pour un véhicule (2), comprenant :
- un agencement de capteur (11) ;
- un module de calcul (10) ; et
- un module de détermination de trajet (12) pour déterminer un trajet (13) du véhicule (2),
dans lequel le module de calcul (10) est configuré pour déterminer au moins un point d'intérêt (4) et son emplacement en analysant des données de capteur acquises de l'agencement de capteur (11),
dans lequel le module de calcul (10) est configuré pour déterminer un champ de vision (3) de l'agencement de capteur (11) au niveau d'une position future du véhicule (2) le long du trajet (13), dans lequel le module de calcul (10) est en outre configuré
pour déterminer si le point d'intérêt (4) est à l'intérieur du champ de vision (3) de l'agencement de capteur (11) au niveau de la position future, et
si c'est le cas, pour déplacer le véhicule (2) vers la position future,
si ce n'est pas le cas, pour ne pas déplacer le véhicule (2) vers la position future et pour changer le trajet du véhicule (2),
dans lequel le module de calcul (10) est configuré
pour réaliser une analyse multi hypothèse, qui repose sur des détections actuelles et antérieures de l'agencement de capteur (11), et pour évaluer ce que serait le champ de vision (3) de l'agencement de capteur pour des hypothèses particulières, et
pour évaluer ces hypothèses et décider comment le véhicule (2) doit se comporter en fonction des informations reçues, et
pour déterminer un emplacement d'arrêt du véhicule (2), de telle sorte que le point d'intérêt (4) est toujours à l'intérieur du champ de vision (3) de l'agencement de capteur (11) au niveau de l'emplacement d'arrêt.

2. Dispositif de prédiction multi hypothèse (1) selon la revendication 1,
dans lequel le module de calcul (10) est configuré pour changer une voie de circulation du véhicule (2), de telle sorte que le point d'intérêt (4) est toujours à l'intérieur du champ de vision (3) de l'agencement de capteur (4).

3. Dispositif de prédiction multi hypothèse (1) selon l'une quelconque des revendications précédentes,
dans lequel le module de calcul (10) est configuré pour déterminer le champ de vision (3) dans des hauteurs ou des plans différents.

4. Dispositif de prédiction multi hypothèse (1) selon la revendication 3,
dans lequel chacun des hauteurs ou plans différents sont espacés de 50 cm les uns des autres.

5. Dispositif de prédiction multi hypothèse (1) selon chacune des revendications précédentes,
dans lequel le module de calcul (10) est configuré pour déterminer le point d'intérêt (4) en fonction de données de capteur de l'agencement de capteur (11) ou d'objets dans une carte.

6. Dispositif de prédiction multi hypothèse (1) selon chacune des revendications précédentes,
dans lequel le point d'intérêt (4) est au moins l'un de ce qui suit : un feu de signalisation, un panneau de signalisation, une voie de circulation, un rond-point, une intersection, un trottoir ou une zone piétonne.

7. Dispositif de prédiction multi hypothèse (1) selon chacune des revendications précédentes,
dans lequel l'agencement de capteur (11) comprend au moins l'un de ce qui suit : une caméra, un capteur radar, un capteur lidar, un capteur à ultrasons ou une combinaison de ceux-ci.

8. Véhicule (2) doté d'un dispositif de prédiction multi hypothèse (1) selon l'une quelconque des revendications précédentes.

9. Procédé de prédiction multi hypothèse, comprenant les étapes suivantes :
- la définition (S1) d'au moins un point d'intérêt (49) et de son emplacement en analysant des données de capteur acquises d'un agencement de capteur (11) ;
- la détermination (S2) d'un trajet (13) d'un véhicule (2) ;
- la détermination (S3) d'un champ de vision (3) de l'agencement de capteur (11) au niveau d'une position future du véhicule (2) le long du trajet (13) ;
- la détermination (S4), par un module de calcul (10), si l'emplacement du point d'intérêt (4) est ou non à l'intérieur du champ de vision (3) au niveau de la position future ; et :
si c'est le cas (S5), le fait de déplacer le véhicule (2) vers la position future,
si ce n'est pas le cas (S6), le fait de ne pas déplacer le véhicule (2) vers la position future et le fait de changer le trajet (13) du véhicule (2),
- la réalisation, par le module de calcul (10), d'une analyse multi hypothèse, qui repose sur des détections actuelles et antérieures de l'agencement de capteur (11), et l'évaluation de ce que serait le champ de vision (3) de l'agencement de capteur pour des hypothèses particulières, et
- l'évaluation, par le module de calcul (10), de ces hypothèses et le fait de décider comment le véhicule (2) doit se comporter en fonction des informations reçues, et la détermination d'un emplacement d'arrêt du véhicule (2), de telle sorte que le point d'intérêt (4) est toujours à l'intérieur du champ de vision (3) de l'agencement de capteur (11) au niveau de l'emplacement d'arrêt.

10. Élément de programme informatique pour commander un dispositif de prédiction multi hypothèse selon l'une quelconque des revendications 1 à 7 et/ou un véhicule selon la revendication 8, qui lorsqu'il est exécuté par un module de calcul du dispositif de prédiction multi hypothèse, amène le dispositif de prédiction multi hypothèse à mettre en œuvre le procédé selon la revendication 9.

11. Support lisible par ordinateur, sur lequel un élément de programme informatique selon la revendication 10 est stocké.
